# EUROPEAN PATENT APPLICATION

(11) **EP 4 520 729 A1**
(43) Date of publication of application: **12.03.2025**
(21) Application number: 24198986.2
(22) Date of filing: 06.09.2024
(51) Int. Cl.: C02F 1/00, C02F 1/461, C02F 1/48, C02F 1/66, C02F 103/02

(54) **WATER TREATMENT SYSTEM WITH MONITORING AND CONTROLLING DEVICE**

(30) Priority: 06.09.2023 GB 202313595
(71) Applicant: International Water Treatment Maritime AS, 3470 Slemmestad (NO)
(72) Inventor: EBBESTAD, Geir Qvam, Slemmestad (NO)
(74) Representative: Rogan, Jack William

(57) **Abstract**

The present invention relates to a water treatment device and a wate treatment unit. The water treatment device is for monitoring and controlling a water system unit for a water system. The device comprises a housing, a controller housed in the housing, and a plurality of connection ports. The plurality of connection ports comprises a first port, an input port, and an output port. The device further comprises a conduit comprising plurality of sensors. The plurality of sensors comprises a conductivity sensor, a temperature sensor, and a flow sensor. The controller is configured to determine a parameter of a water system based on an input via the input port from at least one of the plurality of sensors and to output a signal via the output port to a component of a water treatment system when a predetermined threshold has been reached to change the state of a component of the water treatment system.

## Description

### Technical Field

The present invention relates to a device for controlling a water treatment unit for improving the quality of water in a water system. The present invention also relates to a water treatment unit comprising the device.

### Background of the Invention

It is known that water systems in land and marine installations that are used for heating and/or cooling water suffer from adverse effects as a result of poor water quality. When poor quality water circulates within a water system, the conditions for corrosion are often present. Corrosion of components of the water system can lead to malfunction of the water system, which can require expensive repairs. Furthermore, corrosion products can coat surfaces of elements within the water system and reduce the efficiency of the heat transfer components.

### Summary of the Invention

According to an embodiment of the present invention, there is provided a device for monitoring and controlling a water system unit for a water system. The device comprises: a housing, a controller housed in the housing, and a plurality of connection ports, wherein the plurality of connection ports comprise: a first port configured to be connected to a power source; an input port configured to be connected to at least one sensor of the device; an output port configured to be connected to a component of a water system unit; and a conduit comprising a plurality of sensors, the conduit being open ended and configured to be connected at both open ends to a water treatment system; wherein the plurality of sensors comprise: a conductivity sensor configured to sense the conductivity of water flowing through the conduit, a temperature sensor configured to sense the temperature of the water flowing through the conduit, and a flow sensor configured to sense the volume flow rate of the water flowing through the conduit; wherein the controller is configured to determine a parameter of the system based on an input via the input port from at least one of the plurality of sensors and to output a signal via the output port to a component of a water treatment system when a predetermined threshold has been reached to change the state of a component of a water treatment system.

In some embodiments, the conductivity sensor may comprise a first electrode and a second electrode protruding from an inner surface of the conduit towards the centre of the conduit. In some embodiments, the conductivity sensor may be configured to detect electrical conductivity in the range of about 1 uS/cm to about 2000 uS/cm.

In some embodiments, the temperature sensor may protrude from the inner surface of the conduit towards the centre of the conduit. In some embodiments, the temperature sensor may be configured to detect temperature in the range of about 0 °C to about 80 °C.

In some embodiments, the flow sensor may be a mechanical flow sensor. In some embodiments, the mechanical flow sensor may comprise a rotor located in the conduit, wherein the rotational axis of the rotor is parallel and coincident with the longitudinal axis of the conduit. In some embodiments, the flow sensor may be configured to detect volume flow rate in the range of about 3 litres per minute to about 100 litres per minute.

In some embodiments, the controller may be configured to determine the total volume of water that has flowed through the conduit based on the input from the flow sensor.

In some embodiments, the controller may be configured to determine the electrical conductivity of water in the conduit based on the input from the conductivity sensor and to output a signal via the output port to a filling valve to change the state of a component of the water system.

In some embodiments, the controller may be configured to determine the conductivity of the water in the conduit based on the input from the conductivity sensor and corrected by the input from the temperature sensor.

In some embodiments, the device may further comprise a component input port configured to be connected to a sensor of a water system unit.

In some embodiments, the controller may be configured to receive an input via the component input port from an inlet pressure sensor of a water system unit configured to sense the water pressure at an inlet to a water system unit.

In some embodiments, the output port may be configured to be connected to a fill valve of a water system, the controller being configured to output a signal via the output port to change the state of the fill valve in dependence on the water inlet pressure value.

In some embodiments, the controller may be configured to output a signal via the output port to a fill valve to open when the water pressure in a water system is below a predetermined threshold.

In some embodiments, the controller may be configured to output a signal via the output port to a fill valve to close when the water pressure in a water system is above a predetermined threshold.

In some embodiments, the controller may be configured to receive an input via the component input port from an outlet pressure sensor of a water system unit configured to sense the water pressure at an outlet to a water treatment device.

In some embodiments, the output port may be configured to be connected to a drain valve of a water system unit, the controller being configured to output a signal via the output port to change the state of the drain valve in dependence upon the difference between the water inlet pressure sensor input and the water outlet pressure sensor input.

In some embodiments, the controller may be configured to output a signal via the output port to a drain valve to close when the water pressure in a water system is below a predetermined threshold.

In some embodiments, the plurality of connection ports may further comprise an anode port configured to be connected to an anode of a water system unit device, and may further comprise an ammeter configured to sense the current flowing through the anode.

In some embodiments, the plurality of sensors may further comprise a pH sensor configured to sense the acidity of the water flowing through the conduit.

In some embodiments, the controller may be configured to turn off power to an anode of a water treatment device when the acidity of the water flowing through the conduit exceeds a predetermined threshold.

In some embodiments, the plurality of sensors may further comprise a dissolved oxygen sensor.

In some embodiments, the housing may further comprise a display configured to display at least one parameter of the water in the water system determined by the controller dependent on the input from the at least one sensor. In some embodiments, the display may be configured to display the at least one parameter in real time.

In some embodiments, the device may further comprise at least one user input mechanism configured to allow a user to set the predetermined thresholds for each of the parameters.

In some embodiments, the device may further comprise an alarm configured to alert a user when at least one of the parameters has passed a predetermined threshold.

In some embodiments, the device may further comprise a conduit holder. In some embodiments, the conduit holder be connected to the housing and the conduit. In some embodiments, the conduit holder may hold the conduit relative to the housing of the device.

According to another aspect of the present invention, there is provided a water system unit for treating water in a water system, the water system unit comprising a device according to any one of claim 1 to claim 13.

In some embodiments of the water system unit, the device may be formed as an integral component of the water treatment unit.

According to another aspect of the present invention, there is provided a water treatment system for monitoring and controlling the quality of water within the water treatment system. The water treatment system comprises: a water system unit; and a device for monitoring and controlling the filling unit according to any one of claim 1 to claim 13.

In some embodiments of the water treatment system, the device may be formed integrally with the water system unit. In some embodiments of the water treatment system, the device may be a separate and distinct component to the water system unit.

In some embodiments of the water treatment system or the water system unit, the water system unit may be a water treatment unit or a filling unit.

### Brief Description of the Drawings

So that the invention may be more fully understood, embodiments of the present invention will now be described, by way of example only, with reference to the accompanying drawings, in which:
Fig. 1 shows a schematic connection drawing of a water system;
Fig. 2 shows a schematic front view of a water treatment unit;
Fig. 3 shows a schematic perspective cut away view of a water treatment unit;
Fig. 4 shows a schematic perspective rear view of a device;
Fig. 5 shows a schematic front view of a device.
Fig. 6 shows a schematic cross-sectional side view of a conduit;
Fig. 7 shows a schematic cut-away view of a housing of a device; and
Fig. 8 shows a schematic front view of a water treatment unit.

### Detailed Description

Water systems in land and marine installations that are used for heating and/or cooling suffer from adverse effects resulting from poor water quality. When the quality of water within a water system is poor, the conditions for corrosion are often present.

The main conditions that allow for corrosion of elements of a water system to take place include the water having a low pH, the water having a high oxygen content, and the water containing a high amount of minerals that lead to a high conductivity.

When these conditions are present, elements of a water system can corrode. Not only can corrosion of elements of the water system cause damage to and leaks in the system, but corrosion products can also enter into the water system. These corrosion products can cause wear on other elements, such as pumps, which can reduce the efficiency of the water system. Furthermore, in water systems responsible for the transfer of heat, i.e. heating and/or cooling systems, the corrosion products and sludge can be deposited and can build up on heat transfer elements. This can further reduce the efficiency of the heating and/or cooling water system.

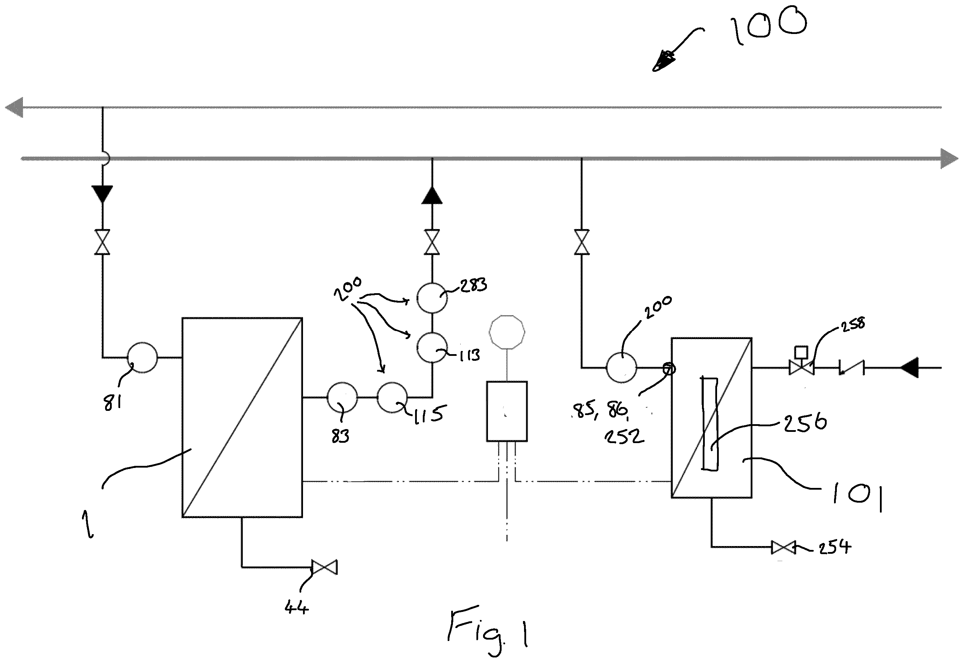

One aspect of the present invention provides a water treatment unit 1 which improves the quality of the water in a water system 100, shown in Fig. 1. The water system 100 may be a heating and/or cooling system such as, for example, but not limited to, HVAC systems, technical coolers, boilers, heat pumps, solar heating, and underfloor heating. The water treatment unit 1 may improve the quality of the water in the water system 100 by increasing the pH of the water in the water system 100, by removing or scavenging oxygen from the water in the water system 100, and by removing particles from the water in the water system 100 to lower its conductivity and keep the water clean.

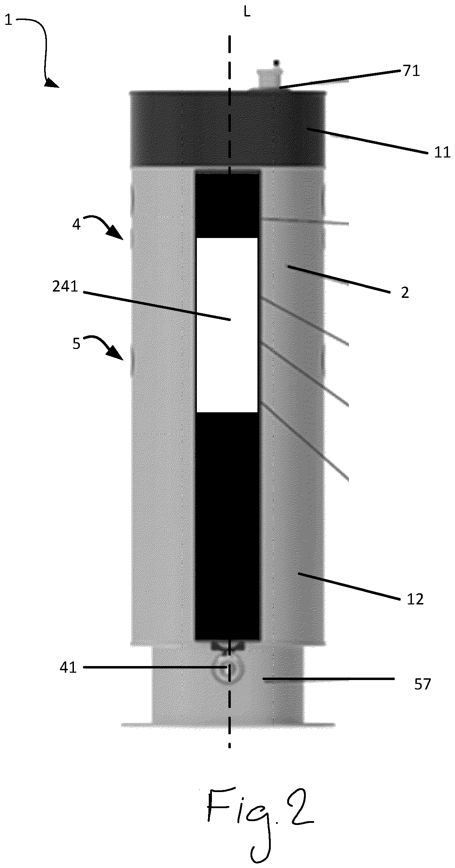

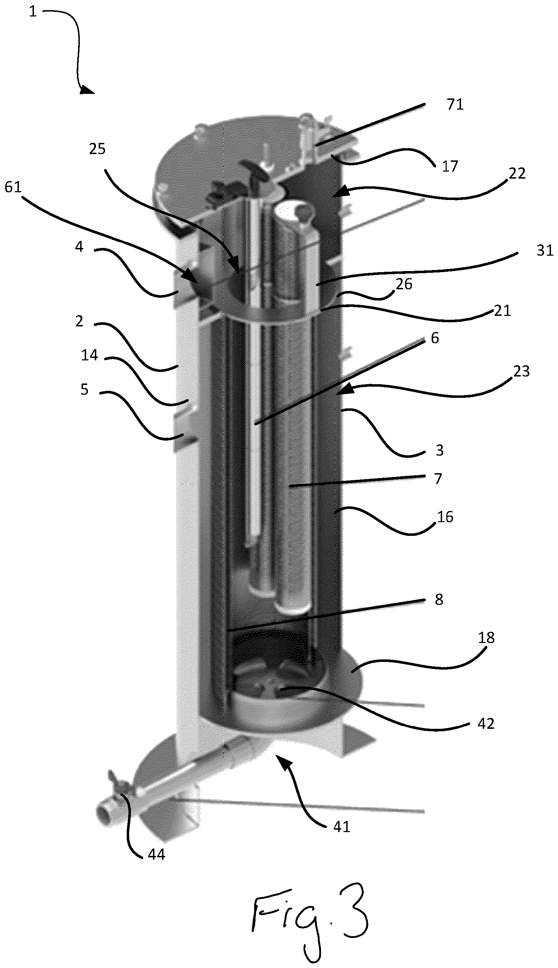

Referring now to Fig. 2 and Fig. 3, there is shown an embodiment of a water system unit 1. In the present embodiment, the water system unit 1 is a water treatment unit 1. However, it will be appreciated that in an alternative embodiment, the water system unit may be a filing unit. Fig. 2 shows a schematic perspective view of a water treatment unit 1, and Fig. 3 shows a schematic perspective cut-away view of the water treatment unit 1 of Fig. 2.

The water treatment unit 1 may be configured to improve the quality of water in a water system 100. The water treatment unit 1 may comprise a housing 2. The housing 2 may be an outer housing. The housing 2 may comprise a container 3, shown in Fig. 3. The container 3 may comprise an inlet 4 and an outlet 5. The inlet 4 may be configured to allow a flow of water into the container 3. The flow of water into the inlet 4 may come from the water system 100. The outlet 5 may be configured to allow a flow of water out of the container 3. The flow of water out of the outlet 5 may flow to the water system 100.

Referring to Fig. 3, the water treatment unit 1 may further comprise a magnet 6. The magnet 6 may be configured to attract ferrous particles that are suspended in the flow of water. The magnet 6 may be further configured to retain the ferrous particles to remove the ferrous particles from the flow of water through the container 3. The water treatment unit 1 may further comprise a sacrificial anode 7. The sacrificial anode 7 may be configured to provide cathodic protection and to scavenge oxygen from the flow of water through the container 3. In addition, the wate treatment unit 1 may comprise a filter element 8. The filter element 8 may be configured to remove detritus from the flow of water. The magnet 6, sacrificial anode 7, and the filter element 8 may be located within the container 3 of the water treatment unit 1.

In the illustrated embodiment of Fig. 2, the housing 2 is generally cylindrical. The housing 2 is also elongate. That is, the length of the housing 2 along its longitudinal axis L is greater than the width or depth of the housing 2. However, it will be appreciated that in alternative embodiments, the housing 2 may take a different form, for example, but not limited to cuboidal or any other polygonal prism.

In some embodiments, the housing 2 may comprise a lid portion 11, or cap, and a base portion 12. The lid portion 11 may be removable form the base portion 12 to enable features of the water treatment unit 1 within the container 3 to be removed for maintenance or replaced.

Referring to Fig. 3, it can be seen that the longitudinal axes of the housing 2 and the container 3 may coincide. That is, the container 3 may be located centrally within the housing 2. The container 3 may have similar dimensions to the housing 2. However, it will be appreciated that in alternative embodiments, the shape and dimensions of the container 3 may be different to that of the housing 2.

The water treatment unit 1 may further comprise a layer of insulation 14. The layer of insulation 14 may be configured to prevent the temperature of the water within the container 3 from fluctuating and to prevent against condensation within the container 3. The layer of insulation 14 may be located between the housing 2 and the container 3.

In some embodiment, the housing 2 may be formed by an external shell. The external shell of the housing 2 may be formed from stainless steel. In some embodiments, the layer of insulation may be, for example, but not limited to, Armaflex ^{®} insulation.

The container 3 may comprise a cylindrical wall 16. The cylindrical wall 16 may be closed at its top end by a top wall 17. In some embodiments, the top wall 17 may form a part of the cap 11 of the housing 2. In some embodiments, a top portion of the cylindrical wall 16 may also form a part of the cap 1. The cylindrical wall 16 may be closed at its bottom end by a bottom wall 18.

The inlet 4 may be formed by a hole in the cylindrical wall 16. The hole that forms the inlet 4 may also extend through the housing 2, and layer of insulation 14 if present. The outlet 5 may be formed by a hole in the cylindrical wall 16. The hole that forms the outlet 5 may also extend through the housing 5, and layer of insulation 14 is present.

The inlet 4 may be located proximate the top wall 17 of the container 3. The outlet 5 may be located further form the top all 17 than the inlet 4. The outlet 5 may be located approximately half way between the top and bottom walls 17, 18 of the container 3. Thus, any detritus that collects on the bottom wall 18 of the container 3 is less likely to travel up the container 3 and out of the outlet 5 with the flow of water.

As shown in Fig. 3, the water treatment unit 1 may further comprise a splitting element 21. That is, the container 3 may comprise a splitting element 21. The splitting element 21 may extend across the container 3. The splitting element 21 may divide the container 3 into an inlet section 22 and an outlet section 23. The inlet section 22 of the container 3 may be located above the splitting element 21. The outlet section 23 of the container 3 may be located below the splitting element 21.

The splitting element 21 may comprise a central aperture 25. The central aperture 25 may be configured to allow the flow of water to flow from the inlet section 22 of the container 3 to the outlet section 23 of the container 3. The central aperture 25 may have its centre aligned with the longitudinal axis L of the container 3. That is, the longitudinal axis L of the container 3 may extend through the centre of the aperture 25. In some embodiments, the central aperture 25 may be circular.

The splitting element 21 may comprise a peripheral edge 26. The peripheral edge of the splitting element 21 may be configured to abut an inner surface of the cylindrical wall 16 of the container 3. Thus, the peripheral edge 26 of the splitting element 21 may seal against the cylindrical wall 16 of the container 3 such that the flow of water can only leave the inlet section 22 of the container 3 and enter the outlet section 23 of the container 3 via the central aperture 25 in the slitting element 21.

The water treatment unit 1 may comprise at least one magnet 6. The magnet 6 may be cylindrical in shape. As shown in Fig. 3, the magnet 6 may be located between the inlet 4 and the sacrificial anode 7. Thus, the flow of water that enters the inlet section 22 of the container 3 from the inlet 4 must first flow past the magnet 6 before the sacrificial node 7. Thus, ferrous particles can be removed from the flow of water before the flow of water reaches the sacrificial anode 7. In this way, the magnet 6 may protect the sacrificial anode 7 from ferrous particles in the flow of water. The magnet 6 may be removable from the water treatment unit 1.

The magnet 6 may be located in the inlet section 22 of the container 3 and may extend from the inlet section 22 of the container 3 through the central aperture 25 and into the outlet section 23 of the container 3. In some embodiments, the magnet 6 may extend the entire length of the inlet section 22 of the container 3 and may extend over at least half of the length of the outlet section 23.

The magnet 6 may be located in a magnet housing 30. The magnet housing 30 may have a similar shape to the magnet 6. The magnet housing 30 may be configured to prevent the water in the water treatment unit 1 from contacting the magnet 6. The magnet 6 may be a dry magnet. The magnet 6 may be formed from neodymium, optionally with a stainless steel coating to increase the durability and ease of maintenance of the magnet 6.

As shown in Fig. 3, the sacrificial anode 7 may be located on the opposite side of the magnet 6 to the inlet 4 to the container 3. The water treatment unit 1 may comprise at least one sacrificial anode 7.

The sacrificial anode 7 may be located in the inlet section 22 of the container 3 and may extend from the inlet section 22 of the container 3 through the central aperture 25 and into the outlet section 23 of the container 3. In some embodiments, the sacrificial anode 7 may extend almost the whole length of the inlet section 21 of the container 3. A gap having a length in the direction of the longitudinal axis may exist between the top end of the sacrificial anode 7 and the top wall of the container 3. In some embodiments, the sacrificial anode 7 may extend the entire length of the inlet section 22 of the container 3 and may extend over at least half of the length of the outlet section 23.

The sacrificial anode 7 may be attached to the container 3 of the water treatment unit 1 by a connecting arm 31. The connecting arm 31 may be configured to provide an electrical connection between the container 3 of the water treatment unit 1, as a cathode, and the sacrificial anode 7.

The sacrificial anode 7 may be formed from a metal alloy with a more 'active' voltage than the material of the features of the water system 100 and the water treatment unit 1. That is, the sacrificial anode 7 may have more negative reduction potential or more positive electrode potential. Thus, the anode 7 is sacrificial in the sense that the anode material is configured to be consumed during the process of improving the quality of the flow of water through the water treatment unit 1. The anode is dissolved in the water, which scavenges oxygen in the water and increases the pH of the water. The oxygen in the water is scavenged by reacting with the material of the sacrificial anode. The products of this reaction provide inorganic salts in the water, which increase the pH of the water. The lower oxygen content and higher pH of the water reduces the reactions taking place between the water and components of the water treatment unit 1 and water system 100 that the water treatment unit 1 is connected to during use.

The sacrificial anode 7 may be formed from magnesium. The sacrificial anodes 7 may be formed using high potential magnesium anodes Alternatively, the sacrificial anodes may be formed from, for example, but not limited to, a magnesium alloy, aluminium, an aluminium alloy, zinc, or a zinc alloy. The sacrificial anode 7 may be meshed or un-meshed.

Thus, the corrosion process may be inhibited within the water treatment unit 1 and water system 100 because the oxygen in the flow of water reacts with the sacrificial anode 7 instead of the iron and steel elements of the water treatment unit 1 and the water system 100 due to the presence of the more 'active' sacrificial anode 7. This reduces the oxygen content in the flow of water. This also produces reaction products, such as, for example, magnesium hydroxide, which increases the pH level of the water and reduces corrosion.

Furthermore, the use of the magnet 6 and the sacrificial anode 7 may remove minerals and salts from the flow of water, which in turn reduces the conductivity of the flow of water, and this inhibits corrosion.

As shown in Fig. 3, the water treatment unit 1 may further comprise a filter element 8. The filter element 8 may be located in the outlet section 23 of the container 3. The filter element 8 may extend from the splitting element 21 down into the outlet section 23 of the container 3. The filter element 8 may extend from a surface of the splitting element 21 on the outlet side of the container 3. The filter element 8 may also extend to the bottom wall 18 of the container 3. That is, the filter element 8 may extend over the entire length of the outlet section 23 of the container 3.

The filter element 8 may be a cylindrical filter element 8. That is, the filter element 8 may extend completely around the central aperture 25 in the slitting element 21. Thus, the flow of water into the inlet section 22 of the container 3 may not exit the outlet 5 in the outlet section 23 of the container 3 without passing through the filter element 8. Furthermore, the filter element 8 may extend circumferentially around the magnet 6 and the sacrificial anode 7. Therefore, any material that escapes from the magnet 6 or sacrificial anode 7 can be prevented from exiting the container 3 of the water treatment unit 1 through the outlet 5.

The filter element 8 may be a hollow cylindrical filter element. That is the filter element 8 may be formed by at least one filter screen. The filter element 8 may be formed from a stainless steel mesh with, for example, a 55 um or 110 um screen. In some embodiments, the filter element 8 may be formed by a 1 um bag filter.

As shown in Fig. 3, the water treatment unit 1 may further comprise a drain 41. The drain 41 may be located in the bottom wall 18 of the container 3. That is, the drain may comprise an aperture 42 in the bottom wall 18 of the container 3. By placing the drain 41 at the bottom of the container 3 it is possible to remove all of the water and any products in the water from the container 3. The drain 41 may comprise a drain valve 44. The drain valve 44 may be configured to be opened to allow the container 3 to be drained. The drain valve 44 may be a solenoid valve.

Referring back to Fig. 2, the water treatment unit 1 may further comprise a stand portion 57. The stand portion 57 may be configured to maintain the housing 2 spaced form the ground to accommodate the drain 41.

Referring back to Fig. 3, the water treatment unit 1 may further comprise a flow diverter 61. The flow diverter 61 may be located in the container 3. The flow diverter 61 may be located proximate to the inlet 4 of the container 3. The flow diverter 61 may be located in the inlet section 22 of the container 3 at least partially covering the inlet 4. The flow diverter 61 may be configured to divert the flow of water toward an inner surface of the cylindrical wall 16 of the container 3 to induce a vortex in the inlet section 22 of the container 3 to improve separation efficiency.

The water treatment unit 1 may further comprise a pressure vent 71. The pressure vent 71 may be located in the top wall 17 of the container 3. The pressure vent 71 may extend from the inner section 22 of the container 3 through the top wall 17 of the container 3. The pressure vent 71 may be configured to allow gases separated from the flow of water to be vented out of the container 3 when the pressure in the container 3 exceeds a predetermined level. The pressure vent 71 may also allow gases created as a product of the reactions with the sacrificial anode to exit the container 3.

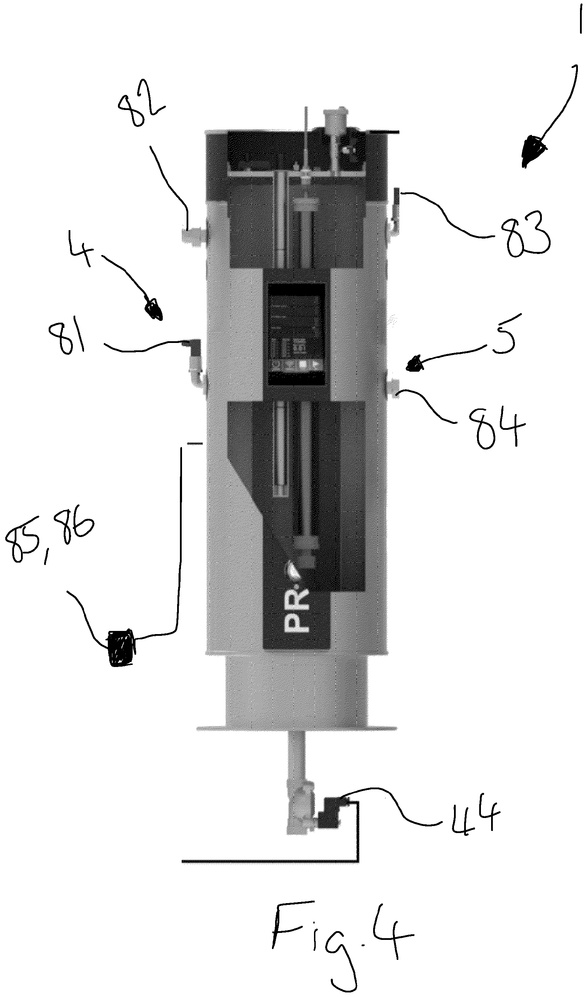

Referring briefly to Fig. 4, there is shown a partial cut-away view of a water treatment unit 1 that is generally the same as the water treatment unit 1 previously described. The water treatment unit 1 may comprise an inlet pressure sensor 81. In some embodiments, the inlet 4 of the water treatment unit 1 may comprise an inlet pressure sensor 81. The inlet pressure sensor 81 may be configured to sense the pressure of the flow of water at the inlet 4 to the water treatment unit 1. The inlet 4 may further comprise an inlet valve 82. The inlet valve 82 may be configured to be opened and closed based on the parameters sensed by a sensor, as explained in more detail hereinafter.

The inlet valve 82 may be a solenoid valve. In some embodiments, the inlet valve 82 may be located in the inlet 4 of the water treatment device 1. In some embodiments, the inlet valve 82 may be fluidly connected to the inlet 4 by a pipe.

The water treatment unit 1 may comprise an outlet pressure sensor 83. In some embodiments, the outlet 5 out the water treatment unit 1 may comprise an outlet pressure sensor 83. The outlet pressure sensor 83 may be configured to sense the pressure of the flow of water at the outlet 5 of the water treatment unit 1. The outlet 5 may further comprise an outlet valve 84. The outlet valve 84 may be configured to be opened and closed based on the parameters sensed by a sensor, as explained in more detail hereinafter.

The outlet valve 84 may be a solenoid valve. In some embodiments, the outlet valve 84 may be located in the outlet 5 of the water treatment device 1. In some embodiments, the outlet valve 84 may be fluidly connected to the outlet 5 by a pipe.

The water treatment unit 1 may further comprise a fill inlet 85. The fill inlet 85 may be configured to be in fluid communication with a fill unit 101, see Fig. 1, of a water treatment system 100. The fill unit 101 may be configured to top up the water in the water treatment system 100 when required, as will be described in more detail hereinafter.

The fill inlet 85 may comprise a fill inlet valve 86. The fill inlet valve 86 may be configured to be closed when the volume of water in the water treatment system 100 is above a predetermined threshold or when the water pressure, as determined by the inlet and outlet pressure sensors 81, 82, in the water treatment system 100 is above a predetermined threshold. The fill inlet valve 86 may be configured to open when the volume when the volume of water or the water pressure is below a predetermined threshold, as will be explained in more detail hereinafter.

The fill inlet valve 86 may be a solenoid valve. In some embodiments, the fill inlet valve 86 may be located in the fill inlet 85 of the water treatment device 1. In some embodiments, the fill inlet valve 86 may be fluidly connected to the fill inlet 85 by a pipe.

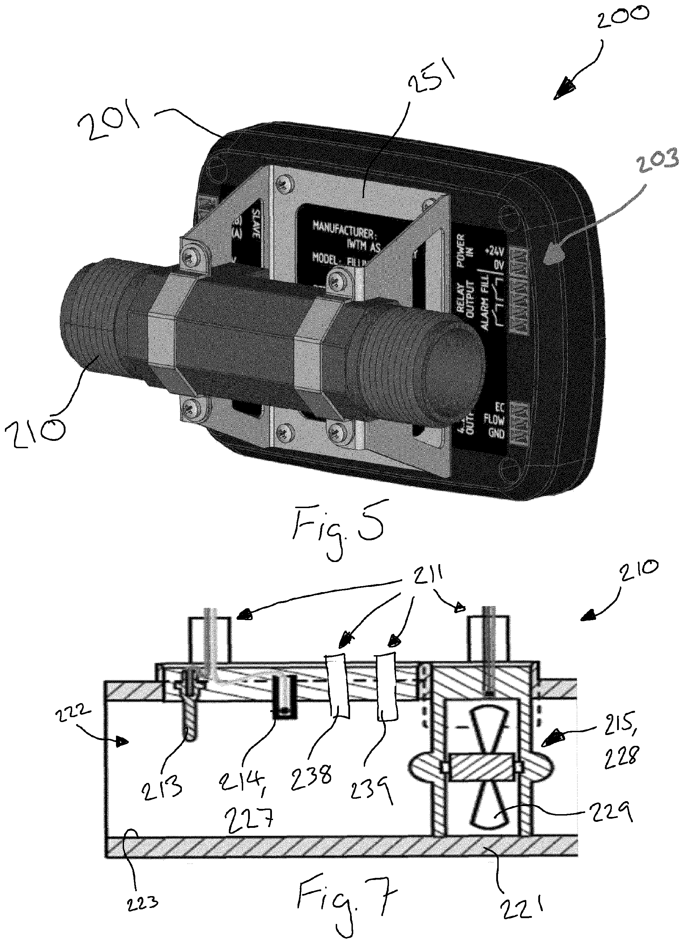

Referring now to Fig. 5, a device 200 for monitoring and controlling a water treatment unit 1 for a water treatment system 100 is shown. In some embodiments, the device 200 may be formed integrally with the water treatment unit 1. In some embodiments, the device 200 may be provided as a separate component that can be added to the water system 100. Therefore, the device 200 may be in fluid communication with the water treatment unit 1. The device 200 may also be electrically connected to the water treatment unit 1.

The device 200 comprises a housing 201. The housing 201 comprises a controller 202 located within the housing 201. The controller 202 may be configured to control the device 200 and the water treatment unit 1 that it is connected to during use. The device 200 further comprises a plurality of connection ports 203, as shown in Fig. 7. The plurality of connection port 203 may be configured to allow the controller 202 to be electrically connected to a plurality of components of the device 200 and/or water treatment unit 1.

Referring to Fig. 7, the plurality of connection ports 203 comprise a first port 204, an input port 205, and an output port 206. The first port 204 is configured to be connected to a power source. The input port 205 is configured to be connected to at least one sensor. The output port 206 is configured to be connected to a component of a water treatment unit 1. Each of the input port 205 and the output port 206 may comprise a plurality of connections. Therefore, the input port 205 may be connected to a plurality of sensor and configured to receive multiple input signals. The output port 206 may be connected to a plurality of components of the water treatment unit 1 or water system 100 and configured to transfer multiple output signals.

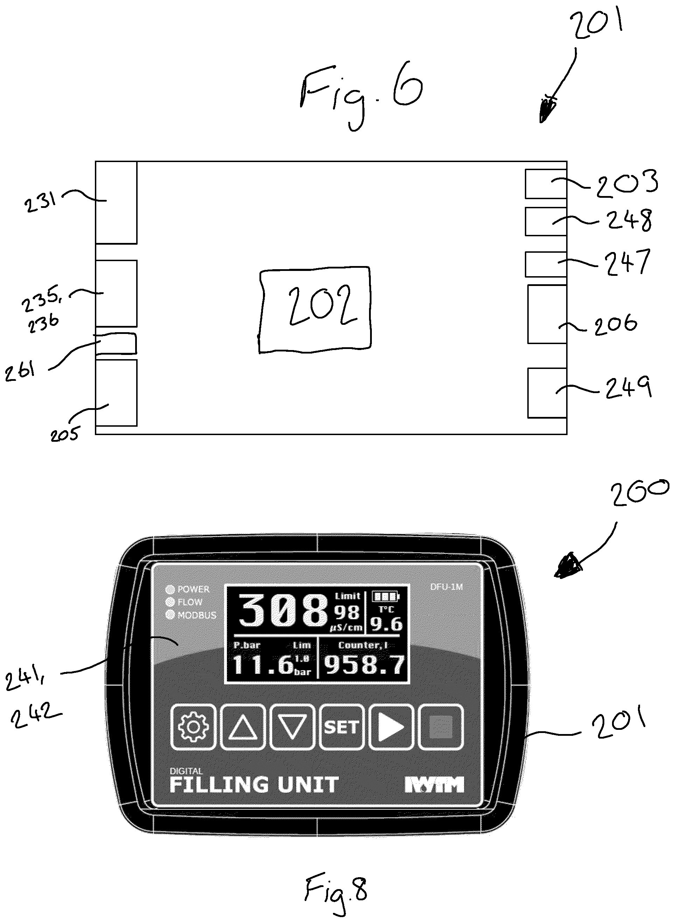

Referring to Fig. 6, the device 200 further comprises a conduit 210. The conduit 210 comprises a plurality of sensors 211. The conduit 210 is open-ended. The conduit 210 is configured to be connected at both open ends to a water treatment system 100. That is, the conduit 210 may be configured to be connected to the flow path of water through a water treatment unit 1 or the pipes of a water treatment system 100 such that the water within the water treatment system 100 flows through the conduit 210.

The plurality of sensors 211 comprise a conductivity sensor 213, a temperature sensor 214, and a flow sensor 215. The conductivity sensor 213 is configured to sense the electrical conductivity of the water flowing through the conduit 210. The temperature sensor 214 is configured to sense the temperature of the water flowing through the conduit 210. The flow sensor 215 is configured to sense the volume flow rate of the water flowing through the conduit 210.

The controller 202 is configured to determine a parameter of the system based on an input, via the input port 205, from at least one of the plurality of sensors 211. The controller 202 is also configured to output a signal, via the output port 205, to a component of a water treatment system 100 when a predetermined threshold has been reached to change the state of a component of a water treatment system 100.

Referring to Fig. 6, the conduit 210 may comprise a generally hollow cylindrical tube. That is, the conduit 210 may be formed by a generally annular wall 221 having an inner aperture 222 extending therethrough. The inner aperture 222 may be defined by an inner surface 223 of the annular wall 221. It will be appreciated that the outer surface of the conduit 210 does not have to have the same shape as the inner aperture 222. For example, the outer surface of the conduit 210 may be hexagonal in order to help mount it within the water treatment unit 1 or water treatment system 100.

The conduit 210 may comprise the plurality of sensors 211 spaced along its length in the longitudinal direction X. In the present embodiment, the plurality of sensors 211 are arranged such that the conductivity sensor 213 is located furthest upstream in the conduit 210 and the flow sensor 215 is located furthest downstream in the conduit 210. Each of the plurality of sensors 211 may extend at least partially into the inner aperture 222 of the conduit 210. That is, each of the plurality of sensors 211 may have a component that extends through the annular wall 221 and protrudes into the inner aperture 222 of the conduit 210.

The conductivity sensor 213 may comprise a first electrode 225 and a second electrode 226. The first and second electrode 225, 226 may protrude from the inner surface 222 of the conduit 210 towards the centre of the conduit 210. The first and second electrodes 225, 226 may be spaced apart so that water can pass therebetween and conduct electricity between them. The conductivity sensor 213 may be configured to detect electrical conductivity in the range of about 1 µS/cm to about 2000 pS/cm. The conductivity sensor 213 may be configured to convert the conductance measured into a signal to be provided to the controller 202 via the input port 204.

The controller 202 may be configured to determine the electrical conductivity of the water in the conduit 210 based on the input from the conductivity sensor 213 via the input port 204. In some embodiments, the conductivity sensor 213 may be wired directly to the input port 204 such that the current measured is fed directly to the controller 202. In some embodiments, the conductivity sensor 213 may measure the current and turn it into a signal to be sent to the controller 202, where the controller 202 may be configured to interpret the current measured from the signal received from the conductivity sensor 213 via the input port 204.

The temperature sensor 214 may be located downstream of the conductivity sensor 213. The temperature sensor 214 may protrude from the inner surface 222 of the conduit 210 towards the centre of the conduit 210. The temperature sensor 214 may comprise a probe 227 that extends from the inner surface 222 of the conduit towards the centre of the conduit 210. The temperature sensor 214 may be configured to sense temperature in the range of about 0°C to about 80°C. The temperature sensor 214 may be a NTC thermistor, for example, but not limited to, a NTC 10k thermistor. The temperature sensor 214 may be configured to convert the resistance of the thermistor into a signal to be provided to the controller 202 via the input port 204.

The controller 202 may be configured to determine the temperature of the water in the conduit 210 based on the input from the temperature sensor 214 via the input port 204. In some embodiments, the temperature sensor 214 may measure the resistance in its circuit, which is affected by the temperature of the water in the conduit 210 and turn it into a signal to be sent to the controller 202, where the controller 202 may be configured to interpret the temperature measured from the signal received from the temperature sensor 214 via the input port 204.

The flow sensor 215 may be located downstream of the temperature sensor 214. The flow sensor 215 may be a mechanical flow sensor 228. The mechanical flow sensor 228 may comprise a rotor 229. The rotor 229 may be configured to rotate about an axis coincident with the longitudinal axis X of the conduit 210. The rotor 229 may be configured to be rotated by the movement of the flow of water past the rotor 229 to cause the rotors 229 to spin. The flow sensor 215 may be configured to convert the movement of the rotor 229 into a signal to be provide to the controller 202 via the input port 204. The flow sensor 215 may be configured to detect the volume flow rate of the water passing through the conduit 210. The flow sensor 215 may be able to detect the volume flow rate in the range of about 3 litres per minute to about 100 litres per minute. In some embodiments, the controller 202 may be configured to determine the total volume of water that has flowed through the conduit 210 based on the input from the flow sensor 215.

The controller 202 may be configured to determine the volume flow rate of the water in the conduit 210 based on the input from the flow sensor 215 via the input port 204. In some embodiments, the flow sensor 215 may measure the volume flow rate of the water in the conduit 210 and turn it into a signal to be sent to the controller 202, where the controller 202 may be configured to interpret the volume flow rate from the signal received from flow sensor 215 via the input port 204. The controller 202 may also be configured to use the volume flow rate of the water in the conduit 210 based on the input form the flow sensor 215 to calculate the volume of water that has flowed through the conduit 210.

In some embodiments, the controller 202 may be configured to determine the electrical conductivity of the water in the conduit 210 based on the input from the conductivity sensor 213. The controller 202 may further be configured to output a signal, via the output port 205, to a valve 82, 86 to close the valve 82, 86 when the electrical conductivity of the water in the conduit 210 has reached a predetermined level. In some embodiments, the controller 202 may be configured to output a signal, via the output port 205, to an alarm or alert system, when the electrical conductivity of the water in the conduit 210 has reached a predetermined level.

As the water in the conduit 210 is representative of the water in the water treatment device 1, and the water system 100 in general, the electrical conductivity measured in the conduit 210 may indicate that the electrical conductivity of the water in the water system 100 is too high.

The controller 202 may send the output signal, based on the input signal from the conductivity sensor 213, to an alarm to notify an operator.

The controller 202 may send the output signal, based on the input signal from the conductivity sensor 213, to the fill inlet valve 86 to close to prevent more water entering the water system 100. This may occur in a situation where the water system 100 requires topping up with water but the newly added water to the water system increases the conductivity of the water in the water system 100. Thus, the fill inlet valve 86 can be closed to allow the water treatment unit 1 to treat the water in the water system 100 to bring the electrical conductivity back down to acceptable levels.

Alternatively, a high electrical conductivity of the water in the water conduit 210 may indicate that a component of the water treatment unit 1, such as the magnet 6, anode 7, or filter 8, has stopped working properly and a change of parts or maintenance is required. The controller 202 may additionally send the output signal, based on the input signal from the conductivity sensor 213, to the inlet valve 82 of the water treatment unit 1 to close to prevent water from entering the water treatment unit 1.

In some embodiments, the controller 202 may be configured to determine the conductivity of the water in the conduit 210 based on the input from the conductivity sensor 213 and corrected by input from the temperature sensor 214. That is, as the temperature of the water may affect is conductivity, the conductivity measured by the conductivity sensor can be corrected based on the input of the temperature sensor 214 to give a more accurate determination of the conductivity of the water due to contaminants.

Referring back to Fig. 7, the device 200 may further comprise a component input port 231. The component input port 231 may be configured to be connected to at least one sensor of a water treatment device 1. The component input port 231 may comprise a plurality of connections. Therefore, the component input port 231 may be connected to a plurality of sensors of the water treatment unit 1. Thus, the component input port 231 may be configured to receive multiple input signals.

In some embodiments, the controller 202 may be configured to receive an input signal, via the component input port 231, from the inlet pressure sensor 81 of the water treatment unit 1 that is configured to sense the water pressure at the inlet 4 to the water treatment unit 1. That is, during use the controller 202 may be electrically connected to the inlet pressure sensor 81 of the water treatment unit 1 via the component input port 231.

The output port 206 may be configured to be electrically connected to a fill valve 86 of the water treatment unit 1 or water system 100. The controller 202 may be configured to output a signal, via the output port 206, to change the state of the fill valve 86 in dependence on the water pressure value. The water pressure value may be the water inlet pressure value. The water inlet pressure value may be determined by the controller 202 in dependence on the input signal received, via the component input port 231, from the inlet pressure sensor 81.

In some embodiments, the controller 202 may be configured to output a signal, via the output port 206, to change the state of the fill valve 86 in dependence on the water inlet pressure value. The water inlet pressure value may be determined by the controller 202 in dependence on the input signal received, via the component input port 231, from the inlet pressure sensor 81.

In some embodiments, the controller 202 may be configured to output a signal, via the output port 206, to change the state of the fill valve 86 based on a manual input from a user, such as receipt of a drain and re-fill command, as will be explained in more detail hereinafter.

In some embodiments, the controller 202 may be configured to output a signal, via the output port 205, to a fill valve 86 to open when the water pressure in the water treatment unit 1 or a water system is below a predetermined threshold. In some embodiments, the controller 202 may be configured to output a signal, via the output port 205, to a fill valve 86 to close, when the water pressure in the water treatment unit 1 or a water system 100 is above a predetermined threshold. The water pressure may be determined by the controller 202 based on input signals from the inlet pressure sensor 81 of the water treatment unit 1.

In some embodiments, the controller 202 may be configured to receive an input, via the component input port 231, from the outlet pressure sensor 83 of a water treatment device 1 that is configured to sense the water pressure at an outlet 5 to the water treatment device 1. That is, during use the controller 202 may be electrically connected to the outlet pressure sensor 83 of the water treatment unit 1 via the component input port 231.

In some embodiments, the output port 206 may be configured to be connected to the drain valve 44 of the water treatment unit 1 or a water system 100. The controller 202 may be configured to output a signal, via the output port 206, to change the state of the drain valve 44 in dependence upon the water pressure value. The water pressure value may be the difference between the water inlet pressure value and the water outlet pressure value. The water inlet and outlet pressure values may be determined by the controller 202 in dependence on the input signal received, via the component input port 231, from the inlet and outlet pressure sensors 81, 83. The controller 202 may be configured to keep the drain valve closed if the pressure is above a predetermined threshold.

In some embodiments, the controller 202 may be configured to output a signal, via the output port 206, to change the state of the drain valve 44 in dependence on a timer set in the controller 202. In this way, a component of the water system 100 can be drained at regular intervals in order to increase the life of the components of the water system 100.

In some embodiments, the controller 202 may be configured to output a signal, via the output port 206, to change the state of the drain valve 44 based on a manual input from a user, such as receipt of a drain and re-fill command, as will be explained in more detail hereinafter.

In some embodiments, the controller 202 may be configured to output a signal, via the output port 205, to the drain valve 44 to close, when the water pressure in a water system is below a predetermined value.

In some embodiments, the plurality of connections ports 203 may further comprise an anode port 235. The anode port 235 may be configured to be connected to an anode 7 of a water treatment device 1. The device 1 may further comprise an ammeter 236. The ammeter 236 may be an integral part of the controller 202. The ammeter 236 may be configured to sense the current flowing through the anode 7. Therefore, the anode 7 may be electrically connected to the controller 202 such that the current flowing through the anode 7 is fed directly into the controller 202 via the ammeter 236.

The plurality of sensors 211 may further comprise a pH sensor 238. The pH sensor may be configured to sense the acidity of the water flowing through the water system 100. The pH sensor 238 may be located in the conduit 210. For example, the pH sensor 238 may be located downstream of the temperature sensor 214 and upstream of the flow sensor 215. The pH sensor 238 may be configured to sense the acidity of the water flowing through the conduit 210.

In some embodiments, the controller 202 may be configured to turn of power to the anode 7 of the water treatment unit 1 when the acidity of the water flowing through the conduit 210 exceeds a predetermined threshold. For example, when the pH sensor 238 senses a low pH, or conditions that are too acidic, in the conduit 210, the controller 202 may turn off power to the anode 7 because the anode 7 requires replacement. Alternatively, if the pH sensor senses a high pH, or conditions that are too alkaline, the controller 202 may turn off power to the anode 7 to allow the pH level to drop back down.

Furthermore, in some embodiments, the plurality of sensors 211 may further comprise a dissolved oxygen sensor 239. The dissolved oxygen sensor 239 may be configured to sense the amount of dissolved oxygen in the water flowing through the water system 100. The dissolved oxygen sensor 239 may be located in the conduit 210. For example, the dissolved oxygen sensor 239 may be located between the temperature sensor 214 and the flow sensor 215. The dissolved oxygen sensor 239 may be configured to sense oxygen levels in the water flowing through the conduit 210.

Referring now to Fig. 8, the device 200 may further comprise a display 241. The display 241 may be mounted in the housing 201. The display 241 may be configured to display at least one parameter of the water in the water system 100 determine by the controller 202 dependent on the input from at least one sensor 211. The display 241 may be configured to display the at least one parameter in real time. For example, the display 241 may display a value representing the electrical conductivity of the water, the anode current, and the temperature. In some embodiments, the display 241 may further display the PH and the dissolved oxygen level. The display 241 may also display the volume flow rate and the total flow. Therefore, an operator or maintenance worker can understand the conditions within the water treatment device 1 and/or water system 100 immediately upon viewing the display 241. The display 241 may be an electronic display.

The device 200 may further comprise at least one user input mechanism 242. The at least one user input mechanism 242 may be configured to allow a user, i.e. operator or maintenance worker, to set the predetermined thresholds for each of the parameters. Thus, a user may raise or lower the boundary conditions for conductivity, pH, and/or pressure that need to be met before the controller 202 takes a corrective action, such as opening or closing valves or providing or stopping power to a component of the water treatment unit 1. In some embodiments, the user input mechanism 242 may take the form of buttons (not shown) located on the side of the housing 201 of the device 200. In some embodiments, the display 241 may be a touchscreen display such that the display 241 is also a user input mechanism 242.

In some embodiments, the device 200 may further comprise an alarm 245. The alarm 245 may be configured to alert a user when at least one of the parameters of the water within the conduit 210, water treatment unit 1, or water system 100 has passed a predetermined threshold.

Referring back to Fig. 5, it can be seen that the device 200 may further comprise a conduit holder 251. The conduit holder 251 may be configured to be connected to both the housing 201 and the conduit 210. Thus, the conduit holder 251 holds the conduit 210 relative to the housing 201 of the device 200. Thus, in some embodiments, the device 200 can be added to the existing piping of a water system 100 and not within a water treatment unit 1.

It will be appreciated that in some embodiments, such as those where the device 200 is formed as a part of the water treatment unit 1, the housing 201, conduit 210, and conduit holder 251 may be integrally formed. In such embodiments, the conduit 210 may be placed within the flow path through the water treatment unit 1. Alternatively, in embodiments, where the device 200 is formed as a part of the water treatment unit 1, the housing 201 and conduit 210 may only be electrically connected.

In some embodiments, the plurality of connection ports 203 of the device 200 may further comprise at least one MODBUS port. The at least one MODBUS port may be connected to the controller 202 and configured to send and receive signals. In the embodiment shown, the plurality of connection ports 203 comprise a master MODBUS port 247 and a slave MODBUS port,

In some embodiments, the plurality of connection ports 203 may further comprise a connection port 249. The connection port 249 may be configured to provide internet connectivity. The connection port 249 may enable connection to the internet via ethernet or wifi. One advantage of the connection port 249 is that the data collected by the device 200 can be shared in real-time with offsite operators and system adjustments may be made remotely. For example, if a parameter of the water in the water system passes a predetermined threshold, the controller 202 may send s signal via the connection port to a phone or web based app or to a control centre where an alarm may be heard or displayed. The operator can then adjust a component of the water system by sending an input signal back from the app or control centre.

In the previously described embodiment, the device 200 has been used to measure parameters of the water flowing within the water system 100 and through a water treatment unit 1. However, it will be appreciated that the device 200 may be used in conjunction with a filling unit 101, as shown in Fig. 1.

In such an embodiment, the device 200 may be located at, or proximate to, an fill inlet 86 of a filling unit 101. It will be appreciated that the fill inlet 86 is the inlet to the water system 100 and an outlet of the filling unit 101. The device 200 may be the same as described above it that it may measure the electrical conductivity, volume flow rate, total flow, and temperature of the water. In addition, the device may measure the pH of the water and its oxygen content.

The input port 205 of the device 200 may be connected to a pressure sensor 252 of the filling unit 101. The pressure sensor 252 may be located at, or proximate to, the fill inlet 86. The output port 205 of the device 200 may be connected to the fill inlet valve 86 and a drain valve 254 of the filling unit 101. It will be appreciated that the fill inlet valve 86 is the inlet to the water system 100 and an outlet of the filling unit 101.

The filling unit 101 may comprise a resin 256. The resin 256 may be configured to remove particles from the water therein that increase the electrical conductivity of the water. Thus, when the resin 256 has been used up, the device 200 will detect a change in at least one of the parameters in the water flowing through the conduit 210, for example, the electrical conductivity. When the electrical conductivity value of the water exiting the filling unit 101 exceeds a predetermined threshold, the controller 202 may send an output to an alarm 245 or a display 241 or an app/control room via the connection port 249.

The operator may then instruct the device 200 to perform a draining of the filling unit 101 so that the resin 256 can be replaced. The operator may also instruct a draining of the entire water system, if required. In some embodiments, the device 200 may automatically send the drain and refill command for one of or both of the filling unit 101 and the water system 100.

The controller 202 may send an output signal, via the output port 206, to an inlet valve 258 into the filling port 101 to prevent any more water entering the filling unit 101. The controller 202 may also send an output signal, via the output port 206, to the fill inlet valve 86 to close the fill inlet valve 86 to prevent any more water entering the water system 100. The controller 202 may also send an output signal, via the output port 206, to the drain valve 254 of the filling unit 101 to open to drain the water out of the filling unit 101 so that the resin 256 can be replaced.

In some embodiments, the plurality of connection ports 203 may further comprise a moisture leakage port 261. The moisture leakage port 261 may be configured to be connected to a leakage detection cable (not shown). Thus, the controller 202 can be configured to alert an operator and/or change the state of a component of the filling unit 101, such as the fill inlet valve 86, in dependence on the input from the leakage detection cable. Thus, the device 200 may be configured to detect a leak in the filling unit 101.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. A device for monitoring and controlling a water system unit for a water system, the device comprising:
a housing, a controller housed in the housing, and a plurality of connection ports,
wherein the plurality of connection ports comprise:
a first port configured to be connected to a power source;
an input port configured to be connected to at least one sensor of the device;
an output port configured to be connected to a component of a water system unit; and
a conduit comprising a plurality of sensors, the conduit being open ended and configured to be connected at both open ends to a water treatment system;
wherein the plurality of sensors comprise:
a conductivity sensor configured to sense the conductivity of water flowing through the conduit,
a temperature sensor configured to sense the temperature of the water flowing through the conduit, and
a flow sensor configured to sense the volume flow rate of the water flowing through the conduit;
wherein the controller is configured to determine a parameter of the system based on an input via the input port from at least one of the plurality of sensors and to output a signal via the output port to a component of a water treatment system when a predetermined threshold has been reached to change the state of a component of a water treatment system.

2. The device according to claim 1, wherein the conductivity sensor comprises a first electrode and a second electrode protruding from an inner surface of the conduit towards the centre of the conduit, and optionally,
wherein the conductivity sensor is configured to detect electrical conductivity in the range of about 1 uS/cm to about 2000 uS/cm.

3. The device according to any one of the preceding claims, wherein the temperature sensor protrudes from the inner surface of the conduit towards the centre of the conduit, and optionally,
wherein the temperature sensor is configured to detect temperature in the range of about 0 °C to about 80 °C.

4. The device according to any one of the preceding claims, wherein the flow sensor is a mechanical flow sensor, and optionally,
wherein the mechanical flow sensor comprises a rotor located in the conduit, wherein the rotational axis of the rotor is parallel and coincident with the longitudinal axis of the conduit, and optionally,
wherein the flow sensor is configured to detect volume flow rate in the range of about 3 litres per minute to about 100 litres per minute, and optionally,
wherein the controller is configured to determine the total volume of water that has flowed through the conduit based on the input from the flow sensor.

5. The device according to any one of the preceding claims, wherein the controller is configured to determine the electrical conductivity of water in the conduit based on the input from the conductivity sensor and to output a signal via the output port to a filling valve to change the state of a component of the water system, and optionally,
wherein the controller is configured to determine the conductivity of the water in the conduit based on the input from the conductivity sensor and corrected by the input from the temperature sensor.

6. The device according to any one of the preceding claims, further comprising a component input port configured to be connected to a sensor of a water system unit.

7. The device according to claim 6, wherein the controller is configured to receive an input via the component input port from an inlet pressure sensor of a water system unit configured to sense the water pressure at an inlet to a water system unit, and optionally,
wherein the output port is configured to be connected to a fill valve of a water system, the controller being configured to output a signal via the output port to change the state of the fill valve in dependence on the water inlet pressure value, and optionally,
wherein the controller is configured to output a signal via the output port to a fill valve to open when the water pressure in a water system is below a predetermined threshold, and optionally,
wherein the controller is configured to output a signal via the output port to a fill valve to close when the water pressure in a water system is above a predetermined threshold.

8. The device according to claim 6 or claim 7, wherein the controller is configured to receive an input via the component input port from an outlet pressure sensor of a water system unit configured to sense the water pressure at an outlet to a water treatment device, and optionally,
wherein the output port is configured to be connected to a drain valve of a water system unit, the controller being configured to output a signal via the output port to change the state of the drain valve in dependence upon the difference between the water inlet pressure sensor input and the water outlet pressure sensor input, and optionally,
wherein the controller is configured to output a signal via the output port to a drain valve to close when the water pressure in a water system is below a predetermined threshold.

9. The device according to any one of the preceding claims, wherein the plurality of connection ports further comprises an anode port configured to be connected to an anode of a water system unit device, and further comprises an ammeter configured to sense the current flowing through the anode.

10. The device according to any one of the preceding claims, wherein the plurality of sensors further comprises a pH sensor configured to sense the acidity of the water flowing through the conduit, and optionally,
wherein the controller is configured to turn off power to an anode of a water treatment device when the acidity of the water flowing through the conduit exceeds a predetermined threshold.

11. The device according to any one of the preceding claims, wherein the plurality of sensors further comprises a dissolved oxygen sensor.

12. The device according to any one of the preceding claims, wherein the housing further comprises a display configured to display at least one parameter of the water in the water system determined by the controller dependent on the input from the at least one sensor, and optionally,
wherein the display is configured to display the at least one parameter in real time.

13. The device according to any one of the preceding claims, wherein the device further comprises at least one of:
at least one user input mechanism configured to allow a user to set the predetermined thresholds for each of the parameters, and
an alarm configured to alert a user when at least one of the parameters has passed a predetermined threshold.

14. A water system unit for treating water in a water system, the water system unit comprising a device according to any one of the preceding claims.

15. A water treatment system for monitoring and controlling the quality of water within the water treatment system, the water treatment system comprising:
a water system unit; and
a device for monitoring and controlling the filling unit according to any one of claim 1 to claim 13.
